Europäisches Patentamt

European Patent Office

Office européen des brevets

(11) Numéro de publication: **0 105 799**
**B1**

(12) **FASCICULE DE BREVET EUROPEEN**

(45) Date de publication du fascicule du brevet: **01.06.88**

(51) Int. Cl.⁴: **H 01 M 6/36**

(21) Numéro de dépôt: **83401903.6**

(22) Date de dépôt: **28.09.83**

(54) Perfectionnement apporté aux piles thermiques à anode de calcium.

(30) Priorité: **28.09.82 FR 8216287**

(43) Date de publication de la demande:
**18.04.84 Bulletin 84/16**

(45) Mention de la délivrance du brevet:
**01.06.88 Bulletin 88/22**

(84) Etats contractants désignés:
**DE GB IT NL SE**

(56) Documents cités:
**FR-A-2 336 865**
**US-A-4 002 498**
**US-A-4 221 849**

**CHEMICAL ABSTRACTS, vol. 83, no. 14, 1975, page 277, no. 118592m, Columbus, Ohio, US JOURNAL OF THE ELECTROCHEMICAL SOCIETY, vol. 129, no. 6, June 1982, pages 1168-1173, Manchester, New Hampshire, US; R. SZWARC et al.: "Discharge characteristics of lithium-boron alloy anode in molten salt thermal cells"**

(73) Titulaire: **SOCIETE NATIONALE INDUSTRIELLE AEROSPATIALE Société dite:**
**37 Boulevard de Montmorency**
**F-75781 Paris Cedex 16 (FR)**

(72) Inventeur: **Tremillon, Bernard**
**44, rue de Gometz**
**F-91440 Bures sur Yvette (FR)**
Inventeur: **Picard, Gérard**
**2, rue du Séminaire de Conflans**
**F-94220 Charenton le Pont (FR)**
Inventeur: **Riffault, Françoise**
**10, rue des Minimes**
**F-45000 Orleans (FR)**

(74) Mandataire: **Rinuy, Santarelli et al**
**14, avenue de la Grande Armée**
**F-75017 Paris (FR)**

Courier Press, Leamington Spa, England.

## Description

La présente invention se rapporte aux améliorations de fonctionnement des piles thermiques à anode de calcium, principalement à une nouvelle structure en double couche d'électrolyte d'une élément d'une pile thermique.

Dans le présente description, on désigne par pile thermique, un générateur électrochimique comprenant une électrode positive et une électrode négative entre lesquelles est disposée une couche d'un électrolyte solide, généralement constitué d'un sel minéral fusible non conducteur à température ambiante mais devenant conducteur lors de sa fusion par chauffage produisant alors de l'électricité par des réactions électrochimiques entre l'anode et la cathode.

On entend plus généralement par "batteries thermique" tout ensemble comprenant plusieurs générateurs électrochimiques du type ci-dessus rappelé reliés en parallèle ou en série, des moyens capables de produire le chaleur nécessaire à l'échauffement desdits générateurs et les éventuels moyens d'isolation thermique assurant le maintien d'une température convenable pendant au moins la durée de fonctionnement.

Ces batteries thermiques sont utilisés comme source d'énergie dans de nombreuses applications, notamment celles nécessitant de longues durées de stockage.

De nombreux systèmes électrochimiques sont employés, dans les piles thermiques. Le choix de l'anode est l'un des facteurs déterminant la force électromotrice (f.e.m.) de la pile. Les métaux de plus fréquemment utilisés sont le magnésium et le calcium.

On citera, à titre d'exemple, l'article de D. A. NISSEN, "A study of the anode — Electrolye interface in a thermal battery", J. Electrochem. Soc., *126,* (1979), 176, dans lequel est décrite une cellule de pile thermique composée d'une anode de calcium déposée par évaporation sur un disque de fer, d'un disque d'électrolyte (eutectique LiCl, KCl, 56% masse) contenant un gélifiant ($SiO_2$, 7% masse) et le dépolarisant ($CaCrO_4$, 37% masse), et d'un disque de fer servant de collecteur de courant.

S. M. SELIS et al "Electrode reactions and iron oxide selection for thermal Cell $Mg/LiCl$—$KCl/FeO_x$, Ni", J. Electrochem. Soc., *110,* (1963), 469, décrivent une cellule dont l'anode est un disque de magnésium, l'électrolyte fondu l'eutectique LiCl KCl et le dépolarisant, l'oxyde de fer $Fe_2O_3$.

Toutefois, une anode de calcium permet d'obtenir une valeur de la f.e.m. plus élevée car le calcium est un métal plus électropositif que le magnésium. L'électrolyte est en général un mélange de chlorures alcalins, plus particulièrement l'eutectique LiCl KCl. L'espace inter-électrodes est maintenu constant par une trame isolante qui retient l'eutectique lorsqu'il est fondu ou par adjonction d'un gélifiant.

Certaines propriétés chimiques et électrochimiques du calcium intervenant dana les réactions de décharge perturbent le fonctionnement de la pile thermique. Par exemple, le calcium réagit avec le lithium contenu dans l'électrolyte pour former un alliage lithium-calcium $CaLi_2$ à bas point de fusion qui peut créer à la périphérie des éléments des fonctions conductrices entre les électrodes provoquant ainsi des courts-circuits. De plus, on constate une dégradation rapide de l'électrode.

Le gélifiant de l'eutectique LiCl.KÇl utilisé dans les piles thermiques est en général une silice pyrogénée qui est un oxoacide dans l'eutectique. La présence de cet oxoacide accélère la dégradation du calcium à l'interface anode-électrolyte.

Le but de la présente invention est de modifier l'interface anode-électrolyte afin d'améliorer la durée de fonctionnement de la pile thermique par une meilleure conservation du calcium.

Ce but est atteint en adoptant, selon le revendication 1, une oxobase, en tant que gélifiant en mélange avec l'eutectique.

Cette oxobase peut être:
— l'oxyde de magnésium MgO
— le phosphate de calcium $Ca_3 (PO_4)_2$
— le phosphate de potassium $K_3PO_4$ ou
— un mélange de phosphate de potassium et de phosphate de calcium.

La propriété gélifiante de l'oxobase MgO est également utilisée pour maintenir convenablement l'électrolyte dans l'espace interélectrodes.

Suivant une forme de réalisation préférée, la cellule unitair résulte de la superposition des éléments suivants.
— une anode en calcium fixé à un collecteur en nickel ou en acier inoxydable;
— un électrolyte constitué d'un mélange de composition massique eutectique LiCl.KCl 70%, et oxobase 30%;
— une cathode constituée d'un mélange de composition massique sulfure de fer $FeS_2$ 50%, LiCl—KCl 46,5% et gélifiant $SiO_2$ 3,5%, ou chromate de calcium $CaCrO_4$ 50%, LiCl—KCl 46,5%, et gélifiant $SiO_2$ 3,5%.

De façon particulière, l'oxobase telle que définie ci-dessus représente de 10 à 80% de la masse de calcium.

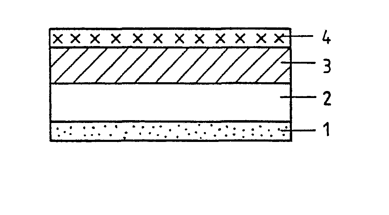

Elle est activée thermiquement par l'intermédiare d'une mélange pyrotechnique à base de zirconium et de chromate de baryum. Elle est schématisée sur la figure annexée où la référence 1 désigne l'électrode négative, la référence 2 l'électrolyte, la référence 3 l'électrode positive et enfin la référence 4 la composition pyrotechnique.

Une telle cellule, suivant l'invention, est capable de débiter 2 ou 3 fois plus longtemps qu'une cellule de même nature dans laquelle il n'y a pas d'ajout d'oxobase.

Il va du reste de soi que la présente invention n'est nullement limitative et que d'autres modifications peuvent y être sans sortir de son cadre.

## Revendications

1. Pile thermique à anode de calcium et à électrolyte gélifié à tension de décharge stabilisée comprenant, intercalée entre l'anode et l'électrolyte, une couche d'un mélange eutectique-gélifiant, où l'eutectique est un eutectique LiCl—KCl composé à 45% de LiCl et à 55% de KCl, caracté-risé par le fait que le gélifiant est une oxobase.

2. Pile selon la revendication 1, caractérisée par le fait que l'oxobase représente de 10 à 80% de la masse de calcium.

3. Pile à anode de calcium selon la revendication 1 ou 2, caractérisée par le fait que l'oxobase est le phosphate de calcium $Ca_3(PO_4)_2$.

4. Pile à anode de calcium selon la revendication 1 ou 2, caractérisée par le fait que l'oxobase est la magnésie MgO.

5. Pile à anode de calcium selon la revendication 1 ou 2, caractérisée par le fait que l'oxobase est le phosphate de potassium $K_3PO_4$.

6. Pile à anode de calcium selon la revendication 1 ou 2, caractérisée par le fait que l'oxobase est un mélange de phosphate de potassium et de phosphate de calcium.

7. Pile selon l'une quelconque des revendications 1 à 6, dans laquelle la couche intercalaire et l'électrolyte sont de même composition et constituées par le mélange eutectique-oxobase, l'anode est en calcium fixé à un collecteur en nickel ou en acier inoxydable, l'électrolyte est constitué d'un mélange de composition massique eutectique LiCl—KCl 70% et oxobase 30% et la cathode est constituée d'un mélange de composition massi-que sulfure de fer $FeS_2$ 50%, LiCl—KCl 46,5% et gélifiant $SiO_2$ 3,5% ou chromate de calcium $CaCrO_4$ 50%, LiCl—KCl 46,5% et gélifiant $SiO_2$ 3,5%.

## Patentansprüche

1. Thermische Zelle mit Kalzium-Anode und geliertem Electrolyt mit stabilisierte Entladungsspannung, die zwischen der Anode und dem Elektrolyt eingeschoben eine Schicht mit einem Gemisch aus Eutektikum und Geliermittel umfaßt, wobei das Eutektikum ein aus 45% LiCl und 55% KCl zusammengesetztes LiCl—KCl-Eutektikum ist, dadurch gekennzeichnet, daß das Geliermittel eine Oxobase ist.

2. Zelle nach Anspruch 1, dadurch gekennzeichnet, daß die Oxobase 10 bis 80% der Kalziummasse darstellt.

3. Zelle mit Kalzium-Anode nach Anspruch 1 oder 2, dadurch gekennzeichnet, daß die Oxobase Kalziumphosphat $Ca_3(PO_4)_2$ ist.

4. Zelle mit Kalzium-Anode nach Anspruch 1 oder 2, dadurch gekennzeichnet, daß die Oxobase Magnesia MgO ist.

5. Zelle mit Kalzium-Anode nach Anspruch 1 oder 2, dadurch gekennzeichnet, daß die Oxobase Kaliumphosphat $K_3PO_4$ ist.

6. Zelle mit Kalzium-Anode nach Anspruch 1 oder 2, dadurch gekennzeichnet, daß die Oxobase eine Mischung aus Kaliumphosphat und Kalziumphosphat ist.

7. Zelle nach einem der Ansprüche 1 bis 6, in der die eingeschobene Schicht und der Elektrolyt dieselbe Zusammensetzung haben und aus einem Gemisch Eutektikum-Oxobase gebildet sind, die Anode aus Kalzium an einem Kollektor aus Nickel oder aus nichtrostendem Stahl befestigt ist, der Elektrolyt aus einem Gemisch der Massenmäßigen Zusammensetzung Eutektikum LiCl—KCl 70% und Oxobase 30% gebildet ist und die Kathode aus einem Gemisch der massen-mäßigen Zusammensetzung Eisensulfid $FeS_2$ 50%, LiCl—KCl 46,5% und Geliermittel $SiO_2$ 3,5% oder Kalziumchromat $CaCrO_4$ 50%, LiCl—KCl 46,5% und Geliermittel $SiO_2$ 3,5% zusammen-gesetzt ist.

## Claims

1. A thermal cell with a calcium anode and a solidified electroyte, having a stabilized discharge voltage comprising, intercalated between the anode and the electrolyte, a layer of a mixture of eutectic and a solidifying agent, where the eutec-tic is a LiCl—KCl eutectic composed of 45% LiCl and 55% KCl, characterized by the fact that the solidifying agent is an oxobase.

2. A thermal cell according to Claim 1, characterized in that the oxobase equals 10 to 80% of the weight of the calcium.

3. A thermal cell with a calcium anode according to Claim 1 or 2, characterized in that the oxobase is calcium phosphate $Ca_3(PO_4)_2$.

4. A thermal cell with a calcium anode according to Claim 1 or 2, characterized in that the oxobase is magnesia MgO.

5. A thermal cell with a calcium anode according to Claim 1 or 2, characterized in that the oxobase is potassium phosphate $K_3PO_4$.

6. A thermal cell with a calcium anode according to Claim 1 or 2, characterized in that the oxobase is a mixture of potassium phosphate and calcium phosphate.

7. A thermal cell according to any one of Claims 1 to 6, in which the intercalated layer and the electrolyte have the same composition and consist of the eutectic-oxobase mixture, the anode is made of calcium attached to a nickel or stainless steel collector, the electrolyte consists of a mixture with a composition by weight eutectic LiCl—KCl 70% and oxobase 30%, and the cathode consists of a mixture with a composition by weight iron sulphide $FeS_2$ 50%, LiCl—KCl 46.5% and solidifying agent $SiO_2$ 3.5%, or calcium chro-mate $CaCrO_4$ 50%, LiCl—KCl 46.5% and solidify-ing agent $SiO_2$ 3.5%.